# EUROPEAN PATENT APPLICATION

(11) **EP 4 801 122 A1**
(43) Date of publication of application: **02.09.2026**
(21) Application number: 24920960.2
(22) Date of filing: 01.02.2024
(51) Int. Cl.: H04W 52/02

(54) **WIRELESS COMMUNICATION METHOD, COMMUNICATION DEVICE, APPARATUS, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN)
(74) Representative: RGTH
(86) International application number: PCT/CN2024/075273
(87) International publication number: WO 2025/160897

(57) **Abstract**

Provided are a wireless communication method, a communication device, an apparatus, and a storage medium. The wireless communication method comprises: a first device receives first downlink control information (DCI) from a second device, the first DCI being used for indicating a resource of first downlink data transmitted by a first physical downlink shared channel (PDSCH); and the first device sends feedback information of the first downlink data to the second device by means of a first uplink channel.

## Description

### TECHNICAL FIELD

The present application relates to the field of communication technologies, and in particular, to a wireless communication method, a communication device, an apparatus and a storage medium.

### BACKGROUND

In ambient Internet of Things (A-IoT) communication, power harvesting and back scattering communication technologies are adopted, having characteristics such as low power consumption and low cost. However, how to transmit information in the ambient Internet of things is an urgent problem to be solved.

### SUMMARY

The present application provides a wireless communication method, a communication device, an apparatus and a storage medium. The various aspects of the present application are described below.

In a first aspect, a wireless communication method is provided, which includes: receiving, by a first device, first downlink control information (DCI) transmitted by a second device, where the first DCI is used to schedule transmission of first downlink data; and transmitting, by the first device, first information to the second device, where the first information is associated with the first DCI and/or the first downlink data; where the first information is carried on a first physical channel, and the first physical channel is a channel carrying uplink data or a random access channel.

In a second aspect, a wireless communication method is provided, which includes: transmitting, by a second device, first DCI to a first device, where the first DCI is used to schedule transmission of first downlink data; and receiving, by the second device, first information transmitted by the first device, where the first information is associated with the first DCI and/or the first downlink data; where the first information is carried on a first physical channel, and the first physical channel is a channel carrying uplink data or a random access channel.

In a third aspect, a communication device is provided, which includes a transceiver, a memory and a processor, where the memory is configured to store a program, and the processor is configured to invoke the program in the memory and control the transceiver to receive or transmit a signal, to enable the communication device to perform the method as described in the first aspect or the second aspect.

In a fourth aspect, an apparatus is provided, which includes a processor, configured to invoke a program from a memory, to enable the apparatus to perform the method as described in the first aspect or the second aspect.

In a fifth aspect, a chip is provided, which includes a processor, configured to invoke a program from a memory, to enable a device equipped with the chip to perform the method as described in the first aspect or the second aspect.

In a sixth aspect, a computer-readable storage medium having a program stored thereon is provided, where the program enables a computer to perform the method as described in the first aspect or the second aspect.

In a seventh aspect, a computer program product is provided, which includes a program, where the program enables a computer to perform the method as described in the first aspect or the second aspect.

In an eighth aspect, a computer program is provided, where the computer program enables a computer to perform the method as described in the first aspect or the second aspect.

In conventional non-A-IoT cellular communications, the first information (e.g., feedback information) associated with the first DCI or the first downlink data channel is carried by an uplink control channel PUCCH. However, an A-IoT terminal device, due to its simple structure, does not support information transmission on the PUCCH. Based on this, in the embodiments of the present application, the feedback information is carried by the first physical channel (the channel for uplink data or the random access channel), thereby helping to achieve the transmission of feedback information in A-IoT.

### BRIEF DESCRIPTION OF THE DRAWINGS

FIG. 1 is a schematic diagram of a system architecture of a wireless communication system to which embodiments of the present application can be applied.
FIG. 2 is a schematic structural diagram of an A-IoT terminal device.
FIG. 3 is a schematic structural diagram of a power harvesting module in FIG. 2.
FIG. 4 is a schematic diagram of a back scattering communication process of an A-IoT terminal device.
FIG. 5 is a schematic diagram of a coding scheme of an A-IoT terminal device.
FIG. 6 is a schematic diagram of a system architecture of an A-IoT communication system provided in an embodiment of the present application.
FIG. 7 is a schematic diagram of a system architecture of an A-IoT communication system provided in another embodiment of the present application.
FIG. 8 is a schematic flowchart of a wireless communication method provided in an embodiment of the present application.
FIG. 9 is a schematic structure diagram of a second device indicating a resource of a first physical channel provided in an embodiment of the present application.
FIG. 10 is a schematic structure diagram of a second device indicating a resource of a first physical channel provided in another embodiment of the present application.
FIG. 11 is a schematic structure diagram of a second device indicating a resource of a first physical channel provided in yet another embodiment of the present application.
FIG. 12 is a schematic structure diagram of indicating a resource of a first physical channel based on an association relationship of data resources provided in an embodiment of the present application.
FIG. 13 is a schematic structural diagram of a communication device provided in an embodiment of the present application.
FIG. 14 is a schematic structural diagram of a communication device provided in another embodiment of the present application.
FIG. 15 is a schematic diagram of an apparatus to which the embodiments of the present application can be applied.

### DETAILED DESCRIPTION

Technical solutions in the present application are described below in conjunction with accompanying drawings.

### Communication System Architecture

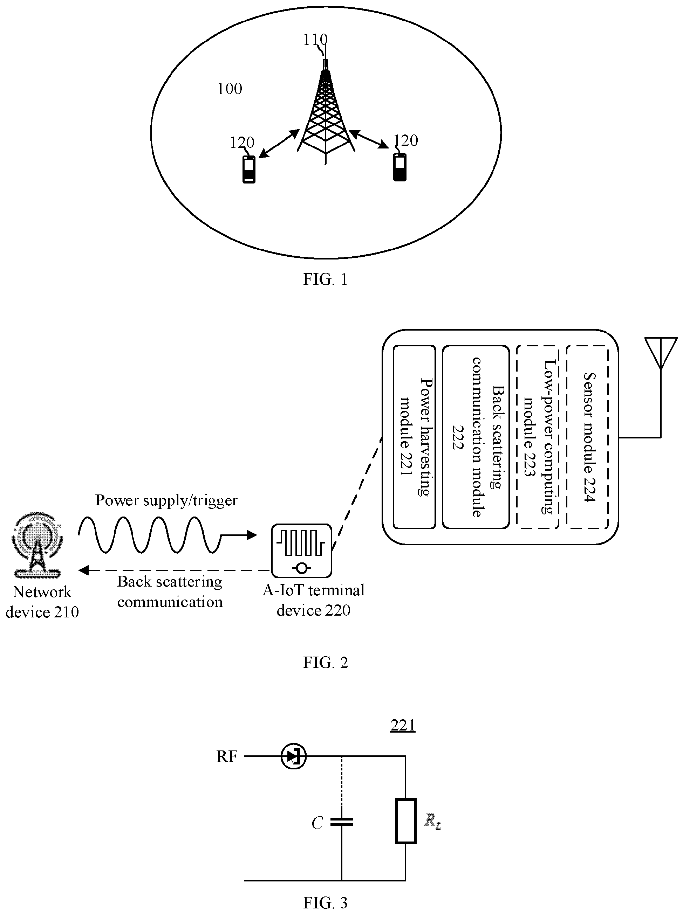

FIG. 1 illustrates a wireless communication system 100 to which the embodiments of the present application are applied. The wireless communication system 100 may include a network device 110 and terminal device(s) 120. The network device 110 may be a device that communicates with the terminal device 120. The network device 110 may provide communication coverage for a specific geographic area and may communicate with the terminal device 120 located within the coverage area. The terminal device 120 may access a network (e.g., a wireless network) via the network device 110.

FIG. 1 exemplarily illustrates a network device and two terminals. Optionally, the wireless communication system 100 may include multiple network devices, and there may be other quantities of terminal devices in the coverage area of each network device, which is not limited in the embodiments of the present application.

Optionally, the wireless communication system 100 may further include other network entities such as a network controller and a mobility management entity, which is not limited in the embodiments of the present application.

It should be understood that the technical solutions in the embodiments of the present application may be applied to various communication systems, such as a 5th generation (5G) system or a new radio (NR) system, a long term evolution (LTE) system, an LTE frequency division duplex (FDD) system, or an LTE time division duplex (TDD) system. The technical solutions provided in the present application may further be applied to future communication systems, such as a 6th generation mobile communication system, or a satellite communication system.

The terminal device in the embodiments of the present application may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent, or a user apparatus. The terminal device in the embodiments of the present application may refer to a device that provides voice and/or data connectivity to a user, and may be used to connect people, objects, and machines, such as handheld devices or vehicle-mounted devices with wireless connection functions. The terminal device in the embodiments of the present application may be a mobile phone, a pad, a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, an IoT terminal device, and the like.

Optionally, the UE may serve as a base station. For example, the UE may serve as a scheduling entity that provides sidelink signals between UEs in scenarios such as vehicle-to-everything (V2X) or device-to-device (D2D). For instance, cellular phones and vehicles communicate with each other using sidelink signals. Cellular phones and smart home devices communicate without relaying signals through a base station.

The network device in the embodiments of the present application may be a device for communicating with terminal devices, and the network device may also be referred to as an access network device or a radio access network device, for example, the network device may be a base station. The network device in the embodiments of the present application may refer to a radio access network (RAN) node (or device) that connects a terminal device to a wireless network. The base station may broadly cover or be interchangeable with various names in the following, such as, NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, radio node, access point (AP), transmission node, transceiver node, base band unit (BBU), remote radio unit (RRU), active antenna unit (AAU), remote radio head (RRH), central unit (CU), distributed unit (DU), or positioning node The base station may be a macro base station, a micro base station, a relay node, a donor node or an analogous device, or a combination thereof. The base station may further refer to a communication module, a modem or a chip installed in the above devices or apparatuses. The base station may further be a device that serves base station functions in a mobile switching center or device-to-device (D2D), vehicle-to-everything (V2X) or machine-to-machine (M2M) communication, a network side device in 6G networks, or a device that serves base station functions in future communication systems. The base station may support networks with the same or different access technologies. The specific technologies or device forms adopted by the network device are not limited in the embodiments of the present application.

In some embodiments, the network device may be fixed or mobile. For example, a helicopter or a drone may be configured to act as a mobile network device, and one or more cells may move according to the position of such mobile network device. In other examples, a helicopter or a drone may be configured as a device communicating with another network device.

In some deployments, the network device in the embodiments of the present application may refer to a CU or a DU, or the network device may include both a CU and a DU. The gNB may further include an AAU.

Network devices and terminal devices may be deployed on land, including indoors or outdoors, handheld or vehicle-mounted, or may also be deployed on water surfaces, or may be deployed on aircraft, balloons and satellites in the air. The scenarios in which network devices and terminal devices are located are not limited in the embodiments of the present application.

It should be understood that all or part of the functions of the communication devices in the present application may also be implemented by software running on hardware or by virtualized functions instantiated on a platform (e.g., a cloud platform).

### A-IoT

In A-IoT communication, power harvesting and back scattering communication technologies are adopted, having characteristics such as low power consumption and low cost. The A-IoT terminal device in the embodiments of the present application may refer to an IoT device that uses various ambient energies (such as radio frequency energy, light energy, solar energy, thermal energy, mechanical energy, and other ambient energies) to drive itself. The A-IoT terminal device may have no energy storage capability or may have very limited energy storage capability (e.g., using a capacitor with a capacitance of tens of uF). Compared to existing IoT devices, the A-IoT terminal device has numerous advantages, such as conventional battery-free, maintenance-free, small volume and size, low complexity, low cost, and a long life cycle. In such a scenario, the above terminal device 120 may be referred to as a "zero-power device" or an "A-IoT terminal device". The operating principle of the A-IoT terminal device is exemplarily introduced below with reference to FIG. 2 to FIG. 7.

As illustrated in FIG. 2, the Ambient Internet of Things may include a network device 210 and an A-IoT terminal device 220. The network device 210 may be, for example, the network device 110 in FIG. 1. The A-IoT terminal device 220 may be, for example, the terminal device 120 in FIG. 1. The network device 210 is used to transmit wireless power supply signals to the A-IoT terminal device 220 and receive backscatter signals from the A-IoT terminal device 220.

In some embodiments, the A-IoT terminal device 220 may include a power harvesting module 221 and a back scattering communication module 222. In some cases, the A-IoT terminal device 220 may further include a low-power computing module 223. The low-power computing module 223 may be used to provide computing functions for the A-IoT terminal device 220, such as data processing. In other cases, the A-IoT terminal device 220 may further include a sensor module 224 for collecting external information (e.g., ambient temperature, ambient humidity). In yet other cases, the A-IoT terminal device 220 may further include a storage module for storing certain information (e.g., the external information collected by the above sensor, or an item identifier).

The above power harvesting module 221 is used to harvest energy. In some implementations, energy may be harvested from power supply signals transmitted by other devices or from the external environment. The power supply signal may be a "radio frequency signal" transmitted by the network device 210; and therefore, the above power harvesting module may be a "radio frequency (RF) power harvesting module".

FIG. 3 illustrates a possible structure of the power harvesting module 221. As illustrated in FIG. 3, the power harvesting module 221 may harvest, based on the principle of electromagnetic induction, the energy of spatial electromagnetic waves from radio frequency signals and store the harvested energy in a capacitor C, which is the process of charging the capacitor C. After the charging process of the capacitor C is ended, the capacitor C may begin to discharge to supply power to the A-IoT terminal device 220. For example, the discharge of the capacitor C may be used to drive the A-IoT terminal device 220 to perform low-power demodulation on data transmitted by other devices. As another example, the discharge of the capacitor C may be used to drive the A-IoT terminal device 220 to modulate data to be transmitted. As another example, the discharge of the capacitor C may be used to drive the sensor of the A-IoT terminal device 220 to perform data collection. As another example, the discharge of the capacitor C may be used to drive the A-IoT terminal device 220 to read data in the memory 215.

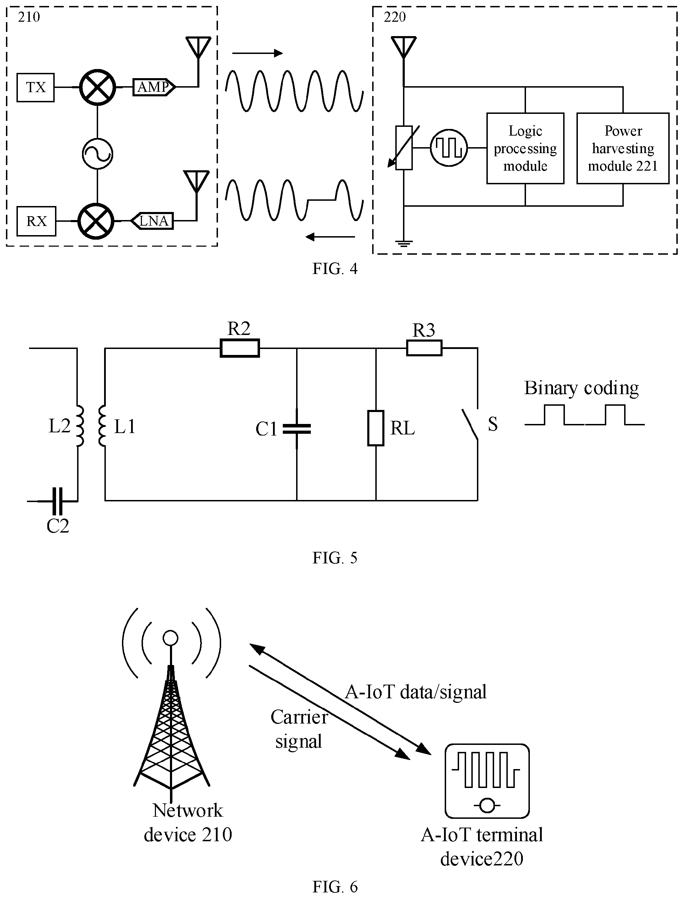

The principle of back scattering communication is described below with reference to FIG. 4. Referring to FIG. 4, the A-IoT terminal device 220 receives a radio signal transmitted by another device (e.g., the network device 210) and modulates the radio signal to load the data that needs to be transmitted. Then, the A-IoT terminal device 220 radiates the modulated signal from the antenna. Such information transmission process is called back scattering communication. The above radio signal may also be referred to as a carrier signal. The carrier signal may refer to an un-modulated radio signal. For example, the carrier signal may be a sinusoidal wave signal. Back scattering communication and load modulation functions are inextricably linked. The load modulation function may be understood as adjusting and controlling circuit parameters of an oscillating loop of the A-IoT terminal device according to the rhythm of the data stream, to enable parameters such as the impedance magnitude of the A-IoT terminal device to change accordingly, thereby completing the modulation process.

In some implementations, the A-IoT terminal device 220 may also be configured with a logic processing unit, to perform corresponding computing functions.

Generally, the load modulation function may be implemented through two manners: resistive load modulation and capacitive load modulation. FIG. 5 illustrates a circuit diagram of an A-IoT terminal device based on the resistive load modulation technology. In the resistive load modulation, a resistor RL may be connected in parallel with the load. A switch S may be controlled by a binary data stream, to implement connection or disconnection of the resistor RL. In this way, the connection and disconnection of the resistor RL cause a change in the circuit voltage, and the change in circuit voltage may control the amplitude of the backscatter signal of the A-IoT terminal device, thereby achieving modulation of the backscatter signal, i.e., performing amplitude-shift keying (ASK) modulation on the backscatter signal.

Similarly, in the capacitive load modulation, the connection and disconnection of a capacitor may be controlled based on a binary data stream, to change the resonant frequency of the circuit, and then the operating frequency of the backscatter signal is changed, thereby achieving frequency-shift keying (FSK) modulation.

It can be seen that the A-IoT terminal device performs information modulation on an incoming wave signal by means of load modulation, thereby realizing the back scattering communication process. Therefore, the A-IoT terminal device has significant advantages: (1) the A-IoT terminal device does not actively transmit a signal, so it does not need a complex radio frequency link, such as a power amplifier or a radio frequency filter; (2) the A-IoT terminal device does not need to actively generate a high-frequency signal, and therefore, it does not need a high-frequency crystal oscillator; and (3) by means of back scattering communication, the signal transmission of the A-IoT terminal device does not need to consume energy of the terminal itself.

In some implementations, the A-IoT terminal device may be battery-free, and certainly, it may also be equipped with a battery. Depending on the energy source and usage, A-IoT terminal devices may be classified into passive A-IoT terminal devices, semi-passive A-IoT terminal devices, and active A-IoT terminal devices.

A passive A-IoT terminal device does not require a built-in battery. When the A-IoT terminal device approaches a network device (such as a Reader/Writer in a radio frequency identification (RFID) system), the A-IoT terminal device is within a near-field range formed by antenna radiation of the network device. Therefore, an antenna of the A-IoT terminal device generates an induced current through electromagnetic induction, and the induced current drives a low-power chip circuit of the A-IoT terminal device, which realizes demodulation of forward link signals (downlink, a link from the network device to the A-IoT terminal device) and modulation of backward link signals (uplink, a link from the A-IoT terminal device to the network device). For a backscattering link, the A-IoT terminal device transmits signals by means of backscattering. It can be seen that the passive A-IoT terminal device does not require a built-in battery to drive either the forward link or the reverse link, and is a true zero-power terminal device. Since the passive A-IoT terminal device does not require batteries, its radio frequency circuit and baseband circuit are very simple, for example, there is no need for devices such as a low noise amplifier, a power amplifier, a crystal oscillator or an analog-to-digital converter. Therefore, the passive A-IoT terminal device has many advantages such as small size, light weight, very cheap price and long service life.

A semi-passive A-IoT terminal device itself is also not equipped with a conventional battery, but may use an RF power harvesting module to harvest radio wave energy or use a solar energy/light energy/thermal energy/kinetic energy harvesting module to harvest energy, and then, store harvested energy in an energy storage unit (such as a capacitor). After obtaining the energy, the energy storage unit may drive the low-power chip circuit of the A-IoT terminal device, which realizes demodulation of forward link signals and modulation of backward link signals. For the backscattering link, the A-IoT terminal device transmits signals by means of backscattering. It can be seen that the semi-passive A-IoT terminal device does not require a built-in battery to drive either the forward link or the reverse link. Although the energy stored in the capacitor is used during operation, the energy comes from the radio energy harvested by the power harvesting module. Therefore, it is also a true zero-power terminal. The semi-passive A-IoT terminal device inherits many advantages of the passive A-IoT terminal device, and therefore, it has many advantages such as small size, light weight, very cheap price and long service life.

An active A-IoT terminal device may have a built-in battery (conventional batteries, such as dry cells or rechargeable lithium-ion batteries). The battery is used to drive the low-power chip circuit of the A-IoT terminal device to realize demodulation of forward link signals and modulation of backward link signals. However, for the backscattering link, the A-IoT terminal device transmits signals by means of backscattering. Therefore, zero-power of the A-IoT terminal devices is mainly reflected in the fact that the signal transmission of the reverse link does not require energy of the terminal itself, but instead uses the manner of backscattering. Although the active A-IoT terminal device uses a battery, its power consumption is very low due to the use of ultra-low-power communication technology, which may significantly extend the operating life of the battery compared to existing technologies. The active A-IoT terminal device supplies power to the RFID chip through the built-in battery, which may increase reading and writing distances of the tags and improve the reliability of communication. Therefore, the active A-IoT terminal device is applied to scenarios that have relatively high requirements for communication distance, read latency and the like.

It should be understood that the traffic types of the Ambient Internet of Things and the traffic types of other Internet of Things are primarily focused on uplink traffics. In some implementations, according to the transmitter type, A-IoT terminal devices may further be classified into: back scattering-based A-IoT terminal devices, active transmitter-based A-IoT terminal devices, and A-IoT terminal devices with both back scattering and active transmitters.

A back scattering-based A-IoT terminal device may use the back scattering mode as described above for uplink data transmission. This type of device does not have an active transmitter for active transmission, but only a backscatter transmitter. Therefore, when this type of terminal transmits data, it requires the network device to provide a carrier wave, and this type of terminal device performs back scattering based on the carrier wave to achieve data transmission.

An active transmitter-based A-IoT terminal device may use an active transmitter with active transmission capabilities for uplink data transmission. Therefore, when this type of A-IoT terminal device transmits data, its own active transmitter is used to transmit data without requiring the network device to provide a carrier wave. Active transmitters suitable for A-IoT terminal devices may be, such as, ultra-low-power ASK transmitters, ultra-low-power FSK transmitters. Based on current implementation examples, the overall power consumption of this type of transmitter may be reduced to 400-600 uW when transmitting a signal of 100 uW.

An A-IoT terminal device with both back scattering and active transmitter may support both back scattering and an active transmitter. The terminal may determine which uplink signal transmission manner to use based on different cases (such as power level or available ambient energy) or based on the scheduling of the network device: whether to use the back scattering mode or to use the active transmitters for active transmission.

The cellular internet of things is undergoing vigorous development. For example, the 3rd generation partnership project (3GPP) has standardized IoT technologies such as narrow band Internet of Things (NB-IoT), machine type communications (MTC), and reduced capability (REDCAP). However, there are still many scenarios where communication requirements of the Internet of Things cannot be met by using existing technologies, such as harsh communication environments (high temperature, low temperature, high humidity, high pressure, high radiation, high-speed motion, or the like), requirements for extremely small terminal form factors, and extremely low costs. Therefore, to cover these unmet IoT communication requirements, it is also necessary to develop ultra-low-cost, extremely small and battery-free/maintenance-free Internet of Things in cellular networks, and the Ambient Internet of Things is well-suited to meet this demand.

Based on the 3GPP SA1 discussion on A-IoT application scenarios, A-IoT may be used in at least the following four categories of scenarios: (1) object identification, such as logistics, management of products on production lines, and supply chain management; (2) environmental monitoring, such as monitoring of temperature, humidity and harmful gases in working environments and natural environments; (3) positioning, such as indoor positioning, smart item finding and positioning of items on production lines; and (4) smart control, such as smart control of various electrical appliances in smart homes (e.g., turning air conditioners on/off or adjusting temperature), and smart control of various facilities in agricultural greenhouses (e.g., automatic irrigation or fertilization).

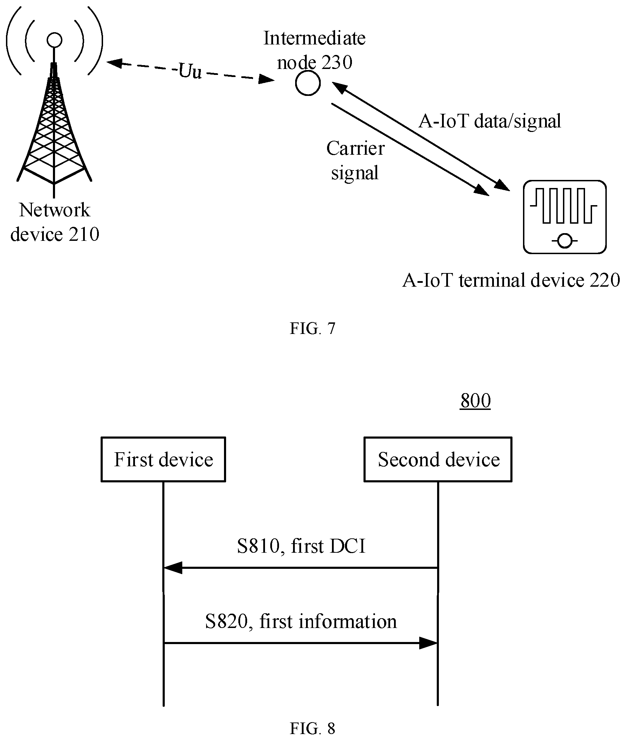

In a cellular-based low-power Internet of Things, as illustrated in FIG. 6, the A-IoT terminal device 220 may directly receive and transmit carrier signals from the network device 210, and transmit or backscatter corresponding data or signals to the network device 210. In other implementations, as illustrated in FIG. 7, communication between the A-IoT terminal device 220 and the network device 210 may also be achieved via an intermediate node 230 (e.g., a relay node). In this case, the intermediate node 230 transmits a carrier signal to the A-IoT terminal device 220, and the A-IoT terminal device 220 transmits or backscatters corresponding data or signals to the intermediate node 230.

According to the above description, in ambient Internet of Things communication, power harvesting and back scattering communication technologies are adopted, having characteristics such as low power consumption and low cost. However, how to transmit information in the A-IoT is an urgent problem to be solved.

It should be understood that in conventional non-A-IoT cellular communications, first information (e.g., feedback information) associated with first DCI or first downlink data channel is carried by an uplink control channel PUCCH. However, an A-IoT terminal device, due to its simple structure, does not support information transmission on the PUCCH. Based on this, in the embodiments of the present application, the feedback information is carried by a first physical channel (a channel for uplink data or a random access channel), thereby helping to achieve the transmission of feedback information in A-IoT. The wireless communication method is described in detail below with reference to FIG. 8.

FIG. 8 is a schematic flowchart of a wireless communication method provided in the embodiments of the present application. The wireless communication method illustrated in FIG. 8 is described from the perspective of communication between a first device and a second device. The first device and the second device in FIG. 8 may be two communication devices at two ends of a communication link. The first device may be a receiving end of the communication link, and the second device is a transmitting end of the communication link. The first device may be, for example, the A-IoT terminal device 220 in FIG. 2, and the second device may be, for example, the network device 210 in FIG. 2. In other implementations, the second device may also be, for example, the intermediate node 230 in FIG. 7, and in this case, the first device communicates with the network device via the intermediate node.

As illustrated in FIG. 8, in step S810, the first device receives first downlink control information (DCI) transmitted by the second device. The first DCI may refer to any piece of downlink control information transmitted by the second device, and the first DCI may be used to schedule transmission of first downlink data. For example, the first downlink data may refer to a data signal transmitted by the second device (e.g., the network device) to the first device (e.g., the A-IoT terminal device).

In step S820, the first device transmits first information to the second device, where the first information may be associated with the first DCI and/or the first downlink data; where the first information may be carried on a first physical channel, and the first physical channel may be a channel carrying uplink data or a random access channel (RACH). The random access channel may be a physical random access channel (PRACH).

The first information may refer to feedback information of the first DCI and/or the first downlink data. For example, the first information may be non-acknowledgement (NACK) information or acknowledgement (ACK) information.

In some implementations, the first information is any one of the following types of information: physical layer information, media access control (MAC) layer information, radio resource control (RRC) layer information, non-access stratum (NAS) information, or application layer information.

In some implementations, the first information includes one or more of: identification information of the first device (e.g., identification (ID) of the first device), identification information associated with the first DCI (e.g., an ID associated with the first DCI) or identification information associated with the first downlink data (e.g., an ID associated with the first downlink data).

In the embodiments of the present application, multiple manners are adopted to indicate a transmission resource of the first physical channel. For example, the transmission resource of the first physical channel may be indicated by the second device; as another example, the transmission resource of the first physical channel may be indicated by an association relationship between a transmission resource of the first DCI or a transmission resource of the first downlink data and the transmission resource of the first physical channel. The manner where the transmission resource of the first physical channel is indicated by the second device are described first with reference to examples.

In some implementations, the transmission resource of the first physical channel may be determined based on first indication information transmitted by the second device. For example, the first indication information is used to indicate one or more of: a start time corresponding to the transmission resource of the first physical channel; or a time length corresponding to the transmission resource of the first physical channel. Certainly, the first indication information may also be used to indicate an end time corresponding to the transmission resource of the first physical channel.

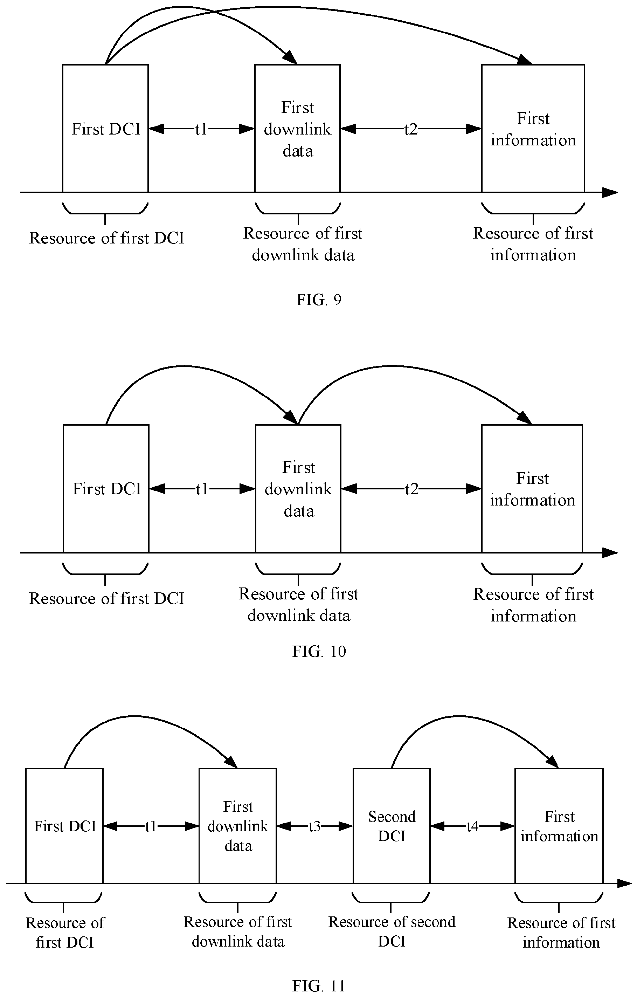

In some implementations, the first indication information may be carried in the first DCI. That is, the first DCI may be used to indicate the transmission resource of the first downlink data, and the first DCI may also be used to indicate the transmission resource of the first physical channel, as illustrated in FIG. 9.

In some implementations, a time interval (t1) between the transmission resource of the first DCI and the transmission resource of the first downlink data may be 0 or may not be 0, that is, a time interval is present or absent between the transmission resource of the first DCI and the transmission resource of the first downlink data. If the time interval is present, the time interval may be defined by a standard or configured by the second device.

In some implementations, with continued reference to FIG. 9, a time interval (t2) between the transmission resource of the first downlink data and the transmission resource of the first physical channel is greater than or equal to a first time interval, so that it is ensured that the first device is provided with sufficient time to process the first downlink data and prepare for the transmission of the first information.

In other implementations, the time interval between the transmission resource of the first downlink data and the transmission resource of the first physical channel is less than or equal to a second time interval, so that it is ensured that when the first device transmits the first information (e.g., the feedback information), a timing deviation is less than a specific value, thereby enabling correct reception by the second device and saving power consumption of the first device. It should be understood that the specific value in the embodiments of the present application is a preset threshold, which may be configured by a network device or a predefined configuration.

In some implementations, the first indication information may also be carried in the first downlink data. That is, the first DCI may be used to indicate the transmission resource of the first downlink data, and the first downlink data may be used to indicate the transmission resource of the first physical channel, as illustrated in FIG. 10.

In some implementations, a time interval (t1) between the transmission resource of the first DCI and the transmission resource of the first downlink data may be 0 or may not be 0, that is, a time interval is present or absent between the transmission resource of the first DCI and the transmission resource of the first downlink data. If the time interval is present, the time interval may be defined by a standard or configured by the second device.

In some implementations, with continued reference to FIG. 10, a time interval (t2) between the transmission resource of the first downlink data and the transmission resource of the first physical channel is greater than or equal to the first time interval, so that it is ensured that the first device is provided with sufficient time to process the first downlink data and prepare for the transmission of the first information.

In other implementations, the time interval between the transmission resource of the first downlink data and the transmission resource of the first physical channel is less than or equal to a second time interval, so that it is ensured that when the first device transmits the first information (e.g., the feedback information), a timing deviation is less than a specific value, thereby enabling correct reception by the second device and saving power consumption of the first device.

It should be noted that the first time interval is greater than 0, and the first time interval may be determined based on protocol-predefined information or configuration information of the second device, and the second time interval may be determined based on protocol-predefined information or configuration information of the second device.

In some implementations, when the first information is carried in the first downlink data, the first information may occupy N bits of the bit information carried in the first downlink data. The N-bit information may be used to indicate an uplink transmission resource of the first information. For example, the N-bit information may be the last N bits or the first N bits of the first downlink data, where N is a specific value that may be defined by a standard or configured by the second device.

In some implementations, the first DCI may further be used to indicate whether the first downlink data includes the first indication information.

In some implementations, the first indication information may also be carried in second DCI, and the second DCI is used to schedule transmission of the first information. That is, the first DCI may be used to indicate the transmission resource of the first downlink data, and the second DCI may be used to indicate the transmission resource of the first information, as illustrated in FIG. 11.

In some implementations, the second DCI may refer to downlink control information transmitted by the second device that is different from the first DCI. Using different DCIs to respectively indicate the transmission resource of the first downlink data and the transmission resource of the first information helps to simplify data signal transmission on the downlink data channel and the downlink control channel.

In some implementations, a format of the first DCI may be the same as a format of the second DCI. Certainly, the format of the first DCI may also be different from the format of the second DCI.

To facilitate identification of the association relationship between the first downlink data scheduled by the first DCI and the first information scheduled by the second DCI, the first downlink data scheduled by the first DCI needs to satisfy one or more of: that the first downlink data is associated with a first index, and the first index is the same as an index carried in the second DCI; and/or, that the first downlink data is the last downlink data received by the first device before transmitting the first information; and/or, that after receiving the first downlink data, the first device does not expect to receive second downlink data transmitted by the second device before transmitting the first information, where the second downlink data is not associated with the first information.

In some implementations, the first index is carried in the first DCI, and the first index is the same as the index carried in the second DCI. Based on the same index, it may be determined that an association relationship is present between the first downlink data scheduled by the first DCI and the first information scheduled by the second DCI. For example, according to the above same index, it may be determined that the first information is the feedback information of the first downlink data.

In some implementations, the above index may be indicated by bit information. For example, the index may be indicated by 2 bits, with a value range of 0, 1, 2 and 3, which may be used to uniquely identify multiple downlink transmissions transmitted by the second device to the first device.

In some implementations, the first downlink data is the last downlink data received by the first terminal device that satisfies a first condition, and the first condition includes that a time interval (t3) between the transmission resource of the first downlink data and a transmission resource of the second DCI is greater than or equal to a third time interval, where the third time interval is determined based on protocol-predefined information or configuration information of the second device.

It may be understood that the time interval between the transmission resource of the first downlink data and the transmission resource of the second DCI may refer to a time interval between a start time of the transmission resource of the first downlink data and a start time of the transmission resource of the second DCI, or may be a time interval between the start time of the transmission resource of the first downlink data and an end time of the transmission resource of the second DCI, or may be a time interval between an end time of the transmission resource of the first downlink data and the start time of the transmission resource of the second DCI, or may be a time interval between the end time of the transmission resource of the first downlink data and the end time of the transmission resource of the second DCI, which is not specifically limited in the present application.

In some implementations, the first downlink data is the last downlink data received by the first terminal device that satisfies the first condition, where the first condition includes that the time interval between the transmission resource of the first downlink data and the transmission resource of the second DCI is greater than or equal to the third time interval, and that after receiving the first downlink data, the first device does not expect to receive the second downlink data transmitted by the second device before transmitting the first information, the second downlink data being not associated with the first information. That is, after receiving the first downlink data, the first device does not expect to receive another downlink data that requires feedback information before transmitting the first information associated with the first downlink transmission.

In some implementations, the time interval between the transmission resource of the first downlink data and the transmission resource of the second DCI is greater than or equal to the third time interval, where the third time interval is greater than 0, which helps to ensure that the first device is provided with sufficient time to prepare for the transmission of the first information. In addition, the time interval between the transmission resource of the first downlink data and the transmission resource of the second DCI is less than or equal to a fourth time interval, so that it is ensured that when the first device transmits the first information, a timing deviation is less than a specific value, thereby enabling correct reception by the second device and reducing power consumption of the first device.

In some implementations, with continued reference to FIG. 11, a time interval (t1) between the transmission resource of the first DCI and the transmission resource of the first downlink data may be 0 or may not be 0, that is, a time interval is present or absent between the transmission resource of the first DCI and the transmission resource of the first downlink data. If the time interval is present, the time interval may be defined by a standard or configured by the second device.

In some implementations, a time interval (t4) between the transmission resource of the second DCI and the transmission resource of the first physical channel is greater than or equal to a preset threshold, and the preset threshold may be 0.

The above content primarily introduces that the transmission resource of the first physical channel is indicated by the second device. The manner where the transmission resource of the first physical channel is indicated through an association relationship between the transmission resource of the first DCI or the transmission resource of the first downlink data and the transmission resource of the first physical channel is described in detail with reference to examples.

In some implementations, the transmission resource of the first physical channel is determined based on one or more of: an association relationship between the transmission resource of the first DCI and the transmission resource of the first physical channel; or an association relationship between the transmission resource of the first downlink data and the transmission resource of the first physical channel.

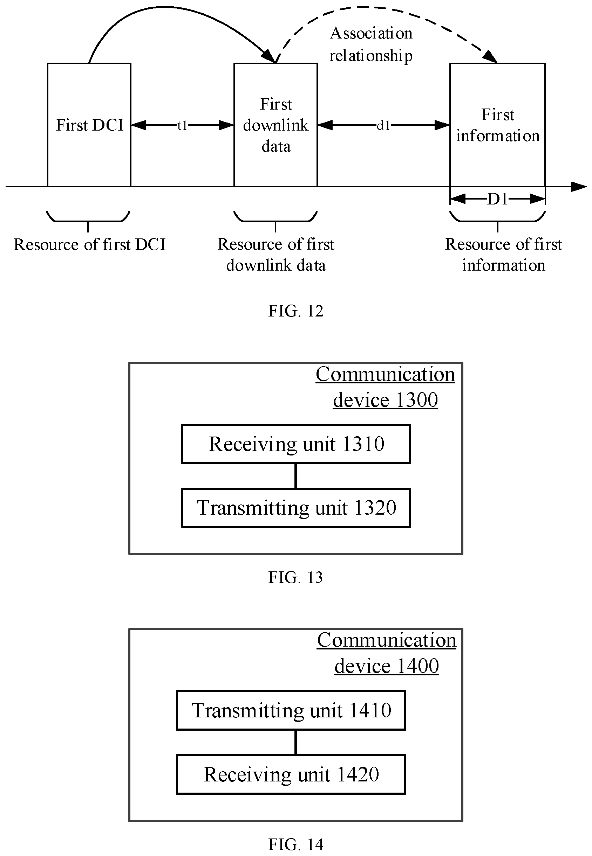

In some implementations, the first DCI may be used to indicate the transmission resource of the first downlink data, and there is an association relationship between the transmission resource of the first downlink data and the transmission resource of the first physical channel. Then, the transmission resource of the first physical channel may be indicated based on the association relationship, as illustrated in FIG. 12.

In some implementations, to facilitate determination of the above association relationship, the transmission resource of the first information may be a transmission resource with a fixed time length.

In some implementations, a time interval between the transmission resource of the first physical channel and the transmission resource of the first downlink data is less than or equal to a first threshold, and the first threshold is determined based on protocol-predefined information or configuration information of the second device.

Exemplarily, with continued reference to FIG. 12, the time length of the uplink resource for transmitting the first information (i.e., the transmission resource of the first physical channel) is D1, and a distance between the time start point of the uplink resource of the first information and the end point of the transmission of the first downlink data is d1, where both D1 and d1 may be defined by a standard or configured by the second device.

It should be understood that the configured value of d1 should be less than a preset threshold, such that the timing deviation of the first device when transmitting the first information does not exceed the reception capability of the second device or does not affect the transmissions of other devices.

In some implementations, the time length (D1) corresponding to the transmission resource of the first physical channel may be determined based on protocol-predefined information or configuration information of the second device; and the time interval (d1) between the transmission resource of the first physical channel and the transmission resource of the first downlink data is determined based on protocol-predefined information or configuration information of the second device.

In some implementations, with continued reference to FIG. 12, a time interval (t1) between the transmission resource of the first DCI and the transmission resource of the first downlink data may be 0 or may not be 0, that is, a time interval is present or absent between the transmission resource of the first DCI and the transmission resource of the first downlink data. If the time interval is present, the time interval may be defined by a standard or configured by the second device.

In some implementations, the first physical channel is the random access channel, and code domain information of the random access channel is indicated based on the first DCI or second DCI, where the second DCI is used to schedule transmission of the first information.

In some implementations, the first physical channel is the random access channel, and the code domain information of the random access channel is determined based on one or more of: identification information of a physical layer of the first device (e.g., a physical layer ID of the first device); a cyclic redundancy check (CRC) of the first downlink data; a CRC of the first DCI; indication information in the first DCI; or indication information in the first downlink data.

In some implementations, after receiving the first DCI or the first downlink data, the first device may transmit corresponding feedback information to the second device. If the first device does not receive the first DCI or the first downlink data, the first device may not transmit the corresponding feedback information to the second device. In this case, if the second device does not receive the feedback information of the first device, the second device may retransmit the first DCI or the first downlink data to the first device.

In other implementations, after receiving the first DCI or the first downlink data, the first device may transmit corresponding first feedback information (e.g., ACK information) to the second device. If the first device does not receive the first DCI or the first downlink data, the first device may transmit corresponding second feedback information (e.g., NACK information) to the second device. In this case, if the second device receives the second feedback information of the first device, the second device may retransmit the first DCI or the first downlink data to the first device.

In some implementations, a time interval is present or absent between the transmission resource of the first DCI and the transmission resource of the first downlink data. If the time interval is present, the time interval may be defined by a standard or configured by the second device.

The method embodiments of the present application are described in detail above with reference to FIG. 1 to FIG. 12. The apparatus embodiments of the present application are described in detail with reference to FIG. 13 to FIG. 15. It should be understood that the descriptions of the method embodiments and the apparatus embodiments correspond to each other; and therefore, parts not described in detail may be referred to the above method embodiments.

FIG. 13 is a schematic structural diagram of a communication device according to the embodiments of the present application. The communication device 1300 illustrated in FIG. 13 is a first device, and the communication device 1300 includes a receiving unit 1310 and a transmitting unit 1320. The receiving unit 1310 is configured to receive first downlink control information (DCI) transmitted by a second device, where the first DCI is used to schedule transmission of first downlink data; and the transmitting unit 1320 is transmit first information to the second device, where the first information is associated with the first DCI and/or the first downlink data. The first information is carried on a first physical channel, and the first physical channel is a channel carrying uplink data or a random access channel.

In some implementations, a transmission resource of the first physical channel is determined based on first indication information transmitted by the second device.

In some implementations, the first indication information is carried in the first DCI and/or the first downlink data.

In some implementations, a time interval between a transmission resource of the first downlink data and the transmission resource of the first physical channel is greater than or equal to a first time interval; and/or a time interval between a transmission resource of the first downlink data and the transmission resource of the first physical channel is less than or equal to a second time interval.

In some implementations, the first time interval is determined based on protocol-predefined information or configuration information of the second device; and/or the second time interval is determined based on protocol-predefined information or configuration information of the second device.

In some implementations, the first indication information is carried in second DCI, and the second DCI is used to schedule transmission of the first information.

In some implementations, a format of the first DCI is the same as a format of the second DCI; or a format of the first DCI is different from a format of the second DCI.

In some implementations, the first downlink data is associated with a first index, and the first index is the same as an index carried in the second DCI.

In some implementations, the first index is carried in the first DCI.

In some implementations, the first downlink data satisfies one or more of: that the first downlink data is last downlink data received by the first device before transmitting the first information; and/or that after receiving the first downlink data, the first device does not expect to receive second downlink data transmitted by the second device before transmitting the first information, where the second downlink data is not associated with the first information.

In some implementations, the first downlink data is last downlink data received by the first device that satisfies a first condition, and the first condition includes that a time interval between a transmission resource of the first downlink data and a transmission resource of the second DCI is greater than or equal to a third time interval.

In some implementations, the third time interval is determined based on protocol-predefined information or configuration information of the second device.

In some implementations, the first indication information is used to indicate one or more of: a start time corresponding to a transmission resource of the first physical channel; or a time length corresponding to a transmission resource of the first physical channel.

In some implementations, a transmission resource of the first physical channel is determined based on one or more of: an association relationship between a transmission resource of the first DCI and the transmission resource of the first physical channel; or an association relationship between a transmission resource of the first downlink data and the transmission resource of the first physical channel.

In some implementations, a time length corresponding to the transmission resource of the first physical channel is determined based on protocol-predefined information or configuration information of the second device; and a time interval between the transmission resource of the first physical channel and the transmission resource of the first downlink data is determined based on protocol-predefined information or configuration information of the second device.

In some implementations, the time interval between the transmission resource of the first physical channel and the transmission resource of the first downlink data is less than or equal to a first threshold, and the first threshold is determined based on protocol-predefined information or configuration information of the second device.

In some implementations, a transmission resource of the first information is a transmission resource with a fixed time length.

In some implementations, a time interval is present or absent between a transmission resource of the first DCI and a transmission resource of the first downlink data.

In some implementations, the first physical channel is the random access channel, and code domain information of the random access channel is indicated based on the first DCI or second DCI, where the second DCI is used to schedule transmission of the first information.

In some implementations, the first physical channel is the random access channel, and the code domain information of the random access channel is determined based on one or more of: identification information of a physical layer of the first device; a cyclic redundancy check (CRC) of the first downlink data; a CRC of the first DCI; indication information in the first DCI; or indication information in the first downlink data.

In some implementations, the first information is feedback information of the first DCI and/or the first downlink data.

In some implementations, the first information includes one or more of: identification information of the first device; identification information associated with the first DCI; or identification information associated with the first downlink data.

In some implementations, the first device is an Ambient Internet of Things (A-IoT) terminal device.

In some implementations, the second device is: a network device; or an intermediate node, where the first device communicates with a network device based on the intermediate node.

FIG. 14 is a schematic structural diagram of a communication device according to the embodiments of the present application. The communication device 1400 illustrated in FIG. 14 is a second device, and the communication device 1400 includes a transmitting unit 1410 and a receiving unit 1420. The transmitting unit 1410 is configured to transmit first downlink control information (DCI) to a first device, where the first DCI is used to schedule transmission of first downlink data; and the receiving unit 1420 is configured to receive first information transmitted by the first device, where the first information is associated with the first DCI and/or the first downlink data. The first information is carried on a first physical channel, and the first physical channel is a channel carrying uplink data or a random access channel.

In some implementations, a transmission resource of the first physical channel is determined based on first indication information transmitted by the second device.

In some implementations, the first indication information is carried in the first DCI and/or the first downlink data.

In some implementations, a time interval between a transmission resource of the first downlink data and the transmission resource of the first physical channel is greater than or equal to a first time interval; and/or a time interval between a transmission resource of the first downlink data and the transmission resource of the first physical channel is less than or equal to a second time interval.

In some implementations, the first time interval is determined based on protocol-predefined information or configuration information of the second device; and/or the second time interval is determined based on protocol-predefined information or configuration information of the second device.

In some implementations, the first indication information is carried in second DCI, and the second DCI is used to schedule transmission of the first information.

In some implementations, a format of the first DCI is the same as a format of the second DCI; or a format of the first DCI is different from a format of the second DCI.

In some implementations, the first downlink data is associated with a first index, and the first index is the same as an index carried in the second DCI.

In some implementations, the first index is carried in the first DCI.

In some implementations, the first downlink data satisfies one or more of: that the first downlink data is last downlink data received by the first device before transmitting the first information; and/or that after the first device receives the first downlink data, the first device does not expect to receive second downlink data transmitted by the second device before transmitting the first information, where the second downlink data is not associated with the first information.

In some implementations, the first downlink data is last downlink data received by the first device that satisfies a first condition, and the first condition includes that a time interval between a transmission resource of the first downlink data and a transmission resource of the second DCI is greater than or equal to a third time interval.

In some implementations, the third time interval is determined based on protocol-predefined information or configuration information of the second device.

In some implementations, the first indication information is used to indicate one or more of: a start time corresponding to a transmission resource of the first physical channel; or a time length corresponding to a transmission resource of the first physical channel.

In some implementations, a transmission resource of the first physical channel is determined based on one or more of: an association relationship between a transmission resource of the first DCI and the transmission resource of the first physical channel; or an association relationship between a transmission resource of the first downlink data and the transmission resource of the first physical channel.

In some implementations, a time length corresponding to the transmission resource of the first physical channel is determined based on protocol-predefined information or configuration information of the second device; and a time interval between the transmission resource of the first physical channel and the transmission resource of the first downlink data is determined based on protocol-predefined information or configuration information of the second device.

In some implementations, the time interval between the transmission resource of the first physical channel and the transmission resource of the first downlink data is less than or equal to a first threshold, and the first threshold is determined based on protocol-predefined information or configuration information of the second device.

In some implementations, a transmission resource of the first information is a transmission resource with a fixed time length.

In some implementations, a time interval is present or absent between a transmission resource of the first DCI and a transmission resource of the first downlink data.

In some implementations, the first physical channel is the random access channel, and code domain information of the random access channel is indicated based on the first DCI or second DCI, where the second DCI is used to indicate transmission of the first information.

In some implementations, the first physical channel is the random access channel, and the code domain information of the random access channel is determined based on one or more of: identification information of a physical layer of the first device; a cyclic redundancy check (CRC) of the first downlink data; a CRC of the first DCI; indication information in the first DCI; or indication information in the first downlink data.

In some implementations, the first information is feedback information of the first DCI and/or the first downlink data.

In some implementations, the first information includes one or more of: identification information of the first device; identification information associated with the first DCI; or identification information associated with the first downlink data.

In some implementations, the first device is an Ambient Internet of Things (A-IoT) terminal device.

In some implementations, the second device is: a network device; or an intermediate node, where the first device communicates with a network device based on the intermediate node.

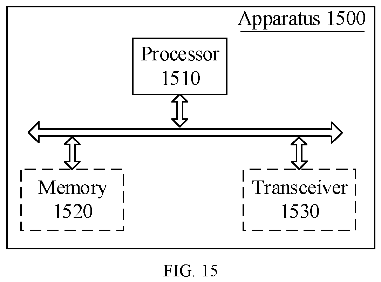

FIG. 15 is a schematic structural diagram of a communication apparatus to which the embodiments of the present application can be applied. The dashed lines in FIG. 15 represent that the unit or module is optional. The apparatus 1500 may be configured to implement the methods described in the above method embodiments. The apparatus 1500 may be a chip or a communication device.

The apparatus 1500 may include one or more processors 1510. The processor 1510 may support the apparatus 1500 in implementing the methods described in the above method embodiments. The processor 1510 may be a general-purpose processor or a special-purpose processor. For example, the processor may be a central processing unit (CPU), or the processor may further be another general-purpose processor, a digital signal processor (DSP), an application-specific integrated circuit (ASIC), a field programmable gate array (FPGA) or other programmable logic devices, a discrete gate or transistor logic device, a discrete hardware component, or the like. The general-purpose processor may be a microprocessor, or the processor may also be any conventional processor, and so on.

The apparatus 1500 may further include one or more memories 1520. The memory 1520 has a program stored thereon, and the program may be executed by the processor 1510, to enable the processor 1510 to perform the methods described in the above method embodiments. The memory 1520 may be independent of the processor 1510 or integrated into the processor 1510.

The apparatus 1500 may further include a transceiver 1530. The processor 1510 may communicate with other devices or chips through the transceiver 1530. For example, the processor 1510 may receive and transmit data with other devices or chips through the transceiver 1530.

The embodiments of the present application further provide a computer-readable storage medium for storing a program. The computer-readable storage medium may be applied to the first network element, the application function network element, or the first communication device provided in the embodiments of the present application, and the program enables a computer to perform the methods performed by the first network element, the application function network element, or the first communication device in the various embodiments of the present application.

The embodiments of the present application further provide a computer program product. The computer program product includes a program. The computer program product may be applied to the first network element, the application function network element, or the first communication device provided in the embodiments of the present application, and the program enables a computer to perform the methods performed by the first network element, the application function network element, or the first communication device in the various embodiments of the present application.

The embodiments of the present application further provide a computer program. The computer program may be applied to the first network element, the application function network element, or the first communication device provided in the embodiments of the present application, and the computer program enables a computer to perform the methods performed by the first network element, the application function network element, or the first communication device in the various embodiments of the present application.

It should be understood that the terms "system" and "network" in the present application may be used interchangeably. Additionally, the terms used in the present application are only intended to explain specific embodiments of the present application and are not intended to limit the application. In the specification and claims of the present application, as well as the accompanying drawings, terms such as "first," "second," "third," and "fourth" are used to distinguish different objects and not to describe a specific order. Further, the terms "include" and "have" and any variations thereof are intended to cover non-exclusive inclusion.

In the embodiments of the present application, the term "indicate" mentioned may mean a direct indication, or an indirect indication, or represent that there is an association relationship. For example, A indicating B may mean that A directly indicates B, e.g., that B may be obtained through A, or it may mean that A indirectly indicates B, e.g., that A indicates C, and B may be obtained through C, or it may mean that there is an association relationship between A and B.

In the embodiments of the present application, "B corresponding to A" represents that B is associated with A, and B may be determined based on A. However, it should further be understood that determining B based on A does not mean that B is determined based on A only, and B may further be determined based on A and/or other information.

In the embodiments of the present application, the term "correspond" may mean there is a relationship of direct or indirect correspondence between the two, or there is an association relationship between the two, or may be a relationship of indicating and being indicated, or configuring and being configured, or the like.

In the embodiments of the present application, "predefined" or "preconfigured" may be implemented by pre-storing corresponding codes, tables or other means that may indicate relevant information in devices (e.g., including terminal devices and network devices). The present application does not limit the specific implementation manner. For example, predefined may refer to what is defined in the protocol.

In the embodiments of the present application, "protocol" may refer to standard protocols in the field of communications, such as may include LTE protocols, NR protocols, and related protocols applied in future communication systems, which is not limited in the present application.

In the embodiments of the present application, the term "and/or" is only an association relationship to describe associated objects, which means that there may be three kinds of relationships. For example, A and/or B may represent three cases that: A exists alone, both A and B exist, and B exists alone. In addition, the character "/" herein generally means that associated objects before and after "/" are in an "or" relationship.

In the various embodiments of the present application, the magnitude of the serial number of each of the above processes does not mean the order of execution. The execution order of each process should be determined by its function and internal logic, and should not constitute any limitation on the implementation process of the embodiments of the present application.

In the several embodiments provided in the present application, it should be understood that, the disclosed systems, apparatuses and methods may be implemented in other ways. For example, the apparatus embodiments described above are only schematic, for example, the division of the units is only division of logical functions, and there may be other division methods in actual implementations. For example, multiple units or components may be combined or integrated into another system, or some features may be ignored or not performed. Additionally, the coupling or direct coupling or communication connection between each other as shown or discussed may be indirect coupling or communicative connection of apparatus or units through some interfaces, which may be electrical, mechanical, or in other forms.

The units illustrated as separate components may be or may not be physically separated, and the components shown as units may be or may not be physical units, that is, the components may be located in one place, or may be distributed onto multiple network units. A part or all of the units may be selected according to actual needs, to implement the purpose of the schemes of the embodiments.

Additionally, various functional units in various embodiments of the present application may be integrated into one processing unit, or the various units may exist physically separately, or two or more units may be integrated into one unit.

In the above embodiments, implementations may be achieved entirely or partially through software, hardware, firmware or any combination thereof. When implemented using software, it may be implemented entirely or partially in the form of a computer program product. The computer program product includes one or more computer instructions. When the computer program instructions are loaded and executed on a computer, the processes or functions according to the embodiments of the present application are generated entirely or partially. The computer may be a general-purpose computer, a special-purpose computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server or data center to another website, computer, server or data center via wired (e.g., coaxial cable, optical fiber, digital subscriber line (DSL)) or wireless (e.g., infrared, radio, microwave) means. The computer-readable storage medium may be any available medium that can be read by a computer or a data storage device such as a server or data center that integrates one or more available mediums. The available medium may be a magnetic medium (e.g., floppy disk, hard disk, magnetic tape), an optical medium (e.g., digital video disc (DVD)), or a semiconductor medium (e.g., solid state disk (SSD)), and the like.

The above content is only specific implementations of the present application, but the protection scope of the present application is not limited thereto, and any skilled person familiar with the present technical field could readily conceive of changes or replacements within the technical scope disclosed in the present application, which shall all fall within the protection scope of the present application. Therefore, the protection scope of the present application shall be subject to the protection scope of the claims.

## Claims

1. A wireless communication method, comprising:
receiving, by a first device, first downlink control information (DCI) transmitted by a second device, wherein the first DCI is used to schedule transmission of first downlink data; and
transmitting, by the first device, first information to the second device, wherein the first information is associated with the first DCI and/or the first downlink data;
wherein the first information is carried on a first physical channel, and the first physical channel is a channel carrying uplink data or a random access channel.

2. The method according to claim 1, wherein a transmission resource of the first physical channel is determined based on first indication information transmitted by the second device.

3. The method according to claim 2, wherein the first indication information is carried in the first DCI and/or the first downlink data.

4. The method according to claim 3, wherein
a time interval between a transmission resource of the first downlink data and the transmission resource of the first physical channel is greater than or equal to a first time interval; and/or
a time interval between a transmission resource of the first downlink data and the transmission resource of the first physical channel is less than or equal to a second time interval.

5. The method according to claim 4, wherein
the first time interval is determined based on protocol-predefined information or configuration information of the second device; and/or
the second time interval is determined based on protocol-predefined information or configuration information of the second device.

6. The method according to claim 2, wherein the first indication information is carried in second DCI, and the second DCI is used to schedule transmission of the first information.

7. The method according to claim 6, wherein
a format of the first DCI is the same as a format of the second DCI; or
a format of the first DCI is different from a format of the second DCI.

8. The method according to claim 6 or 7, wherein the first downlink data is associated with a first index, and the first index is the same as an index carried in the second DCI.

9. The method according to claim 8, wherein the first index is carried in the first DCI.

10. The method according to claim 6, wherein the first downlink data satisfies one or more of:
that the first downlink data is last downlink data received by the first device before transmitting the first information; and/or
that after receiving the first downlink data, the first device does not expect to receive second downlink data transmitted by the second device before transmitting the first information, wherein the second downlink data is not associated with the first information.

11. The method according to claim 6, wherein the first downlink data is last downlink data received by the first device that satisfies a first condition, and the first condition comprises that a time interval between a transmission resource of the first downlink data and a transmission resource of the second DCI is greater than or equal to a third time interval.

12. The method according to claim 11, wherein the third time interval is determined based on protocol-predefined information or configuration information of the second device.

13. The method according to any one of claims 1 to 12, wherein first indication information is used to indicate one or more of:
a start time corresponding to a transmission resource of the first physical channel; or
a time length corresponding to a transmission resource of the first physical channel.

14. The method according to claim 1, wherein a transmission resource of the first physical channel is determined based on one or more of:
an association relationship between a transmission resource of the first DCI and the transmission resource of the first physical channel; or
an association relationship between a transmission resource of the first downlink data and the transmission resource of the first physical channel.

15. The method according to claim 14, wherein
a time length corresponding to the transmission resource of the first physical channel is determined based on protocol-predefined information or configuration information of the second device; and
a time interval between the transmission resource of the first physical channel and the transmission resource of the first downlink data is determined based on protocol-predefined information or configuration information of the second device.

16. The method according to claim 15, wherein the time interval between the transmission resource of the first physical channel and the transmission resource of the first downlink data is less than or equal to a first threshold, and the first threshold is determined based on protocol-predefined information or configuration information of the second device.

17. The method according to any one of claims 14 to 16, wherein a transmission resource of the first information is a transmission resource with a fixed time length.

18. The method according to any one of claims 1 to 17, wherein a time interval is present or absent between a transmission resource of the first DCI and a transmission resource of the first downlink data.

19. The method according to any one of claims 1 to 18, wherein the first physical channel is the random access channel, and code domain information of the random access channel is indicated based on the first DCI or second DCI, wherein the second DCI is used to schedule transmission of the first information.

20. The method according to claim 19, wherein the first physical channel is the random access channel, and the code domain information of the random access channel is determined based on one or more of:
identification information of a physical layer of the first device;
a cyclic redundancy check (CRC) of the first downlink data;
a CRC of the first DCI;
indication information in the first DCI; or
indication information in the first downlink data.

21. The method according to any one of claims 1 to 20, wherein the first information is feedback information of the first DCI and/or the first downlink data.

22. The method according to any one of claims 1 to 21, wherein the first information comprises one or more of:
identification information of the first device;
identification information associated with the first DCI; or
identification information associated with the first downlink data.

23. The method according to any one of claims 1 to 22, wherein the first device is an Ambient Internet of Things (A-IoT) terminal device.

24. The method according to any one of claims 1 to 23, wherein the second device is:
a network device; or
an intermediate node, wherein the first device communicates with a network device based on the intermediate node.

25. A wireless communication method, comprising:
transmitting, by a second device, first downlink control information (DCI) to a first device, wherein the first DCI is used to schedule transmission of first downlink data; and
receiving, by the second device, first information transmitted by the first device, wherein the first information is associated with the first DCI and/or the first downlink data;
wherein the first information is carried on a first physical channel, and the first physical channel is a channel carrying uplink data or a random access channel.

26. The method according to claim 25, wherein a transmission resource of the first physical channel is determined based on first indication information transmitted by the second device.

27. The method according to claim 26, wherein the first indication information is carried in the first DCI and/or the first downlink data.

28. The method according to claim 27, wherein
a time interval between a transmission resource of the first downlink data and the transmission resource of the first physical channel is greater than or equal to a first time interval; and/or
a time interval between a transmission resource of the first downlink data and the transmission resource of the first physical channel is less than or equal to a second time interval.

29. The method according to claim 28, wherein
the first time interval is determined based on protocol-predefined information or configuration information of the second device; and/or
the second time interval is determined based on protocol-predefined information or configuration information of the second device.

30. The method according to claim 26, wherein the first indication information is carried in second DCI, and the second DCI is used to schedule transmission of the first information.

31. The method according to claim 30, wherein
a format of the first DCI is the same as a format of the second DCI; or
a format of the first DCI is different from a format of the second DCI.

32. The method according to claim 30 or 31, wherein the first downlink data is associated with a first index, and the first index is the same as an index carried in the second DCI.

33. The method according to claim 32, wherein the first index is carried in the first DCI.

34. The method according to claim 30, wherein the first downlink data satisfies one or more of:
that the first downlink data is last downlink data received by the first device before transmitting the first information; and/or
that after the first device receives the first downlink data, the first device does not expect to receive second downlink data transmitted by the second device before transmitting the first information, wherein the second downlink data is not associated with the first information.

35. The method according to claim 30, wherein the first downlink data is last downlink data received by the first device that satisfies a first condition, and the first condition comprises that a time interval between a transmission resource of the first downlink data and a transmission resource of the second DCI is greater than or equal to a third time interval.

36. The method according to claim 35, wherein the third time interval is determined based on protocol-predefined information or configuration information of the second device.

37. The method according to any one of claims 25 to 36, wherein first indication information is used to indicate one or more of:
a start time corresponding to a transmission resource of the first physical channel; or
a time length corresponding to a transmission resource of the first physical channel.

38. The method according to claim 25, wherein a transmission resource of the first physical channel is determined based on one or more of:
an association relationship between a transmission resource of the first DCI and the transmission resource of the first physical channel; or
an association relationship between a transmission resource of the first downlink data and the transmission resource of the first physical channel.

39. The method according to claim 38, wherein
a time length corresponding to the transmission resource of the first physical channel is determined based on protocol-predefined information or configuration information of the second device; and
a time interval between the transmission resource of the first physical channel and the transmission resource of the first downlink data is determined based on protocol-predefined information or configuration information of the second device.

40. The method according to claim 39, wherein the time interval between the transmission resource of the first physical channel and the transmission resource of the first downlink data is less than or equal to a first threshold, and the first threshold is determined based on protocol-predefined information or configuration information of the second device.

41. The method according to any one of claims 38 to 40, wherein a transmission resource of the first information is a transmission resource with a fixed time length.

42. The method according to any one of claims 25 to 41, wherein a time interval is present or absent between a transmission resource of the first DCI and a transmission resource of the first downlink data.

43. The method according to any one of claims 25 to 42, wherein the first physical channel is the random access channel, and code domain information of the random access channel is indicated based on the first DCI or second DCI, wherein the second DCI is used to schedule transmission of the first information.

44. The method according to claim 43, wherein the first physical channel is the random access channel, and the code domain information of the random access channel is determined based on one or more of:
identification information of a physical layer of the first device;
a cyclic redundancy check (CRC) of the first downlink data;
a CRC of the first DCI;
indication information in the first DCI; or
indication information in the first downlink data.

45. The method according to any one of claims 25 to 44, wherein the first information is feedback information of the first DCI and/or the first downlink data.

46. The method according to any one of claims 25 to 45, wherein the first information comprises one or more of:
identification information of the first device;
identification information associated with the first DCI; or
identification information associated with the first downlink data.

47. The method according to any one of claims 25 to 46, wherein the first device is an Ambient Internet of Things (A-IoT) terminal device.

48. The method according to any one of claims 25 to 47, wherein the second device is:
a network device; or
an intermediate node, wherein the first device communicates with a network device based on the intermediate node.

49. A communication device, wherein the communication device is a first device, and the communication device comprises:
a receiving unit, configured to receive first downlink control information (DCI) transmitted by a second device, wherein the first DCI is used to schedule transmission of first downlink data; and
a transmitting unit, configured to transmit first information to the second device, wherein the first information is associated with the first DCI and/or the first downlink data;
wherein the first information is carried on a first physical channel, and the first physical channel is a channel carrying uplink data or a random access channel.

50. The communication device according to claim 49, wherein a transmission resource of the first physical channel is determined based on first indication information transmitted by the second device.

51. The communication device according to claim 50, wherein the first indication information is carried in the first DCI and/or the first downlink data.

52. The communication device according to claim 51, wherein
a time interval between a transmission resource of the first downlink data and the transmission resource of the first physical channel is greater than or equal to a first time interval; and/or
a time interval between a transmission resource of the first downlink data and the transmission resource of the first physical channel is less than or equal to a second time interval.

53. The communication device according to claim 52, wherein
the first time interval is determined based on protocol-predefined information or configuration information of the second device; and/or
the second time interval is determined based on protocol-predefined information or configuration information of the second device.

54. The communication device according to claim 50, wherein the first indication information is carried in second DCI, and the second DCI is used to schedule transmission of the first information.

55. The communication device according to claim 54, wherein
a format of the first DCI is the same as a format of the second DCI; or
a format of the first DCI is different from a format of the second DCI.

56. The communication device according to claim 54 or 55, wherein the first downlink data is associated with a first index, and the first index is the same as an index carried in the second DCI.

57. The communication device according to claim 56, wherein the first index is carried in the first DCI.

58. The communication device according to claim 54, wherein the first downlink data satisfies one or more of:
that the first downlink data is last downlink data received by the first device before transmitting the first information; and/or
that after receiving the first downlink data, the first device does not expect to receive second downlink data transmitted by the second device before transmitting the first information, wherein the second downlink data is not associated with the first information.

59. The communication device according to claim 54, wherein the first downlink data is last downlink data received by the first device that satisfies a first condition, and the first condition comprises that a time interval between a transmission resource of the first downlink data and a transmission resource of the second DCI is greater than or equal to a third time interval.

60. The communication device according to claim 59, wherein the third time interval is determined based on protocol-predefined information or configuration information of the second device.

61. The communication device according to any one of claims 49 to 60, wherein first indication information is used to indicate one or more of:
a start time corresponding to a transmission resource of the first physical channel; or
a time length corresponding to a transmission resource of the first physical channel.

62. The communication device according to claim 49, wherein a transmission resource of the first physical channel is determined based on one or more of:
an association relationship between a transmission resource of the first DCI and the transmission resource of the first physical channel; or
an association relationship between a transmission resource of the first downlink data and the transmission resource of the first physical channel.

63. The communication apparatus according to claim 62, wherein
a time length corresponding to the transmission resource of the first physical channel is determined based on protocol-predefined information or configuration information of the second device; and
a time interval between the transmission resource of the first physical channel and the transmission resource of the first downlink data is determined based on protocol-predefined information or configuration information of the second device.

64. The communication device according to claim 63, wherein the time interval between the transmission resource of the first physical channel and the transmission resource of the first downlink data is less than or equal to a first threshold, and the first threshold is determined based on protocol-predefined information or configuration information of the second device.

65. The communication device according to any one of claims 62 to 64, wherein a transmission resource of the first information is a transmission resource with a fixed time length.

66. The communication device according to any one of claims 49 to 65, wherein a time interval is present or absent between a transmission resource of the first DCI and a transmission resource of the first downlink data.

67. The communication device according to any one of claims 49 to 66, wherein the first physical channel is the random access channel, and code domain information of the random access channel is indicated based on the first DCI or second DCI, wherein the second DCI is used to schedule transmission of the first information.

68. The communication device according to claim 67, wherein the first physical channel is the random access channel, and the code domain information of the random access channel is determined based on one or more of:
identification information of a physical layer of the first device;
a cyclic redundancy check (CRC) of the first downlink data;
a CRC of the first DCI;
indication information in the first DCI; or
indication information in the first downlink data.

69. The communication device according to any one of claims 49 to 68, wherein the first information is feedback information of the first DCI and/or the first downlink data.

70. The communication device according to any one of claims 49 to 69, wherein the first information comprises one or more of:
identification information of the first device;
identification information associated with the first DCI; or
identification information associated with the first downlink data.

71. The communication device according to any one of claims 49 to 70, wherein the first device is an Ambient Internet of Things (A-IoT) terminal device.

72. The communication device according to any one of claims 49 to 71, wherein the second device is:
a network device; or
an intermediate node, wherein the first device communicates with a network device based on the intermediate node.

73. A communication device, wherein the communication device is a second device, and the communication device comprises:
a transmitting unit, configured to transmit first downlink control information (DCI) to a first device, wherein the first DCI is used to schedule transmission of first downlink data; and
a receiving unit, configured to receive first information transmitted by the first device, wherein the first information is associated with the first DCI and/or the first downlink data;
wherein the first information is carried on a first physical channel, and the first physical channel is a channel carrying uplink data or a random access channel.

74. The communication device according to claim 73, wherein a transmission resource of the first physical channel is determined based on first indication information transmitted by the second device.

75. The communication device according to claim 74, wherein the first indication information is carried in the first DCI and/or the first downlink data.

76. The communication device according to claim 75, wherein
a time interval between a transmission resource of the first downlink data and the transmission resource of the first physical channel is greater than or equal to a first time interval; and/or
a time interval between a transmission resource of the first downlink data and the transmission resource of the first physical channel is less than or equal to a second time interval.

77. The communication device according to claim 76, wherein
the first time interval is determined based on protocol-predefined information or configuration information of the second device; and/or
the second time interval is determined based on protocol-predefined information or configuration information of the second device.

78. The communication device according to claim 74, wherein the first indication information is carried in second DCI, and the second DCI is used to schedule transmission of the first information.

79. The communication device according to claim 78, wherein
a format of the first DCI is the same as a format of the second DCI; or
a format of the first DCI is different from a format of the second DCI.

80. The communication device according to claim 78 or 79, wherein the first downlink data is associated with a first index, and the first index is the same as an index carried in the second DCI.

81. The communication device according to claim 80, wherein the first index is carried in the first DCI.

82. The communication device according to claim 78, wherein the first downlink data satisfies one or more of:
that the first downlink data is last downlink data received by the first device before transmitting the first information; and/or
that after the first device receives the first downlink data, the first device does not expect to receive second downlink data transmitted by the second device before transmitting the first information, wherein the second downlink data is not associated with the first information.

83. The communication device according to claim 78, wherein the first downlink data is last downlink data received by the first device that satisfies a first condition, and the first condition comprises that a time interval between a transmission resource of the first downlink data and a transmission resource of the second DCI is greater than or equal to a third time interval.

84. The communication device according to claim 83, wherein the third time interval is determined based on protocol-predefined information or configuration information of the second device.

85. The communication device according to any one of claims 73 to 84, wherein first indication information is used to indicate one or more of:
a start time corresponding to a transmission resource of the first physical channel; or
a time length corresponding to a transmission resource of the first physical channel.

86. The communication device according to claim 73, wherein a transmission resource of the first physical channel is determined based on one or more of:
an association relationship between a transmission resource of the first DCI and the transmission resource of the first physical channel; or
an association relationship between a transmission resource of the first downlink data and the transmission resource of the first physical channel.

87. The communication device according to claim 86, wherein
a time length corresponding to the transmission resource of the first physical channel is determined based on protocol-predefined information or configuration information of the second device; and
a time interval between the transmission resource of the first physical channel and the transmission resource of the first downlink data is determined based on protocol-predefined information or configuration information of the second device.

88. The communication device according to claim 87, wherein the time interval between the transmission resource of the first physical channel and the transmission resource of the first downlink data is less than or equal to a first threshold, and the first threshold is determined based on protocol-predefined information or configuration information of the second device.

89. The communication device according to any one of claims 86 to 88, wherein a transmission resource of the first information is a transmission resource with a fixed time length.

90. The communication device according to any one of claims 73 to 89, wherein a time interval is present or absent between a transmission resource of the first DCI and a transmission resource of the first downlink data.

91. The communication device according to any one of claims 73 to 90, wherein the first physical channel is the random access channel, and code domain information of the random access channel is indicated based on the first DCI or second DCI, wherein the second DCI is used to indicate transmission of the first information.

92. The communication device according to claim 91, wherein the first physical channel is the random access channel, and the code domain information of the random access channel is determined based on one or more of:
identification information of a physical layer of the first device;
a cyclic redundancy check (CRC) of the first downlink data;
a CRC of the first DCI;
indication information in the first DCI; or
indication information in the first downlink data.

93. The communication device according to any one of claims 73 to 92, wherein the first information is feedback information of the first DCI and/or the first downlink data.

94. The communication device according to any one of claims 73 to 93, wherein the first information comprises one or more of:
identification information of the first device;
identification information associated with the first DCI; or
identification information associated with the first downlink data.

95. The communication device according to any one of claims 73 to 94, wherein the first device is an Ambient Internet of Things (A-IoT) terminal device.

96. The communication device according to any one of claims 73 to 95, wherein the second device is:
a network device; or
an intermediate node, wherein the first device communicates with a network device based on the intermediate node.

97. A communication device, comprising: a memory and a processor, wherein the memory is configured to store a program, and the processor is configured to invoke the program in the memory, to perform the method according to any one of claims 1 to 24 or the method according to any one of claims 25 to 48.

98. An apparatus, comprising a processor, configured to invoke a program from a memory, to perform the method according to any one of claims 1 to 24 or the method according to any one of claims 25 to 48.

99. A chip, comprising a processor, configured to invoke a program from a memory, to enable a device equipped with the chip to perform the method according to any one of claims 1 to 24 or the method according to any one of claims 25 to 48.

100. A computer-readable storage medium, having a program stored thereon, wherein the program enables a computer to perform the method according to any one of claims 1 to 24 or the method according to any one of claims 25 to 48.

101. A computer program product, comprising a program, wherein the program enables a computer to perform the method according to any one of claims 1 to 24 or the method according to any one of claims 25 to 48.

102. A computer program, wherein the computer program enables a computer to perform the method according to any one of claims 1 to 24 or the method according to any one of claims 25 to 48.
